# FASCICULE DE BREVET EUROPEEN

(11) **EP 2 725 089 B1**
(45) Date de publication et mention de la délivrance du brevet: **24.10.2018**
(21) Numéro de dépôt: 13190360.1
(22) Date de dépôt: 25.10.2013
(51) Int. Cl.: C12C 13/08, C12C 7/20, H05B 6/02, H05B 6/10

(54) **PROCEDE BRASSICOLE ET INSTALLATION CORRESPONDANTE**
Brauverfahren und entsprechende Anlage
Brewing method and corresponding facility

(30) Priorité: 26.10.2012 FR 1260225
(43) Date de publication de la demande: 30.04.2014
(73) Titulaire: Bellet, Christophe, Christian, Francois, 69300 Caluire et Cuire (FR)
(72) Inventeur: Bellet, Christophe, Christian, Francois, 69300 Caluire et Cuire (FR)
(74) Mandataire: Weber, Jean-François

(56) Documents cités:
- EP-A1- 1 731 068
- DE-A1-102011 009 436
- DE-A1-102011 113 350

## Description

La présente invention se rapporte au domaine brassicole, et plus particulièrement au domaine de la fabrication de boissons fermentées, du genre bière, obtenues par traitement, notamment enzymatique, d'un produit de brasserie à base par exemple de céréales maltées ou non.

La présente invention concerne plus particulièrement un procédé brassicole comprenant une étape de mise en contact d'un produit de brasserie avec un élément de transmission de chaleur.

La présente invention concerne également une installation brassicole comprenant un élément de transmission de chaleur conçu pour être mis en contact avec un produit de brasserie.

Les procédés de fabrication de bière sont connus depuis des siècles. Ils reposent en particulier sur la mise en oeuvre d'étapes de saccharification, de filtration, d'ébullition et de fermentation. L'étape de saccharification consiste à soumettre un mélange de céréales (habituellement maltées) et d'eau, formant une substance appelée « *maische* », à différentes étapes de montée en température et de paliers de températures, pour activer par chauffage l'action de différentes enzymes contenues dans la maische de façon à transformer l'amidon de la maische en sucres simples, et en particulier en sucres capables de fermenter. A l'issue de l'étape de saccharification, on filtre la maische pour en extraire d'une part une substance appelée « *moût* » à partir de laquelle va être poursuivi le procédé brassicole et d'autre part un résidu dénommé « *drêche* » susceptible d'être recyclé, par exemple à titre d'aliment pour le bétail. L'étape d'ébullition consiste à porter à ébullition le moût de façon notamment à le stériliser, à le clarifier par coagulation des protéines, à le concentrer par évaporation et ainsi régler le taux de sucres, à le débarrasser des composés volatils indésirables par évaporation de ces derniers, à bloquer l'action enzymatique, à développer l'amertume (par adjonction de houblon et isomérisation des acides alpha issus de ce dernier). C'est également au cours de cette étape d'ébullition qu'ont lieu les réactions de Maillard et de caramélisation qui influent sur les arômes et la couleur.

L'étape de fermentation consiste enfin à ajouter des levures au moût préalablement refroidi rapidement, afin de provoquer la fermentation de ce dernier, en vue notamment de produire de l'alcool.

Les étapes de saccharification et d'ébullition requièrent donc la mise en oeuvre d'opérations de chauffage spécifiques, qui conditionnent le bon déroulement du procédé et partant la qualité du produit final.

Ces opérations de chauffage nécessitent donc l'emploi, dans le cadre d'une production industrielle de bière, d'équipements particuliers qui peuvent se présenter sous différentes formes.

Il est ainsi connu de recourir, selon un premier mode de réalisation connu, à une cuve munie d'une double enveloppe externe au sein de laquelle circule un fluide caloporteur constitué de vapeur d'eau. Une cuve à double enveloppe de ce genre peut être utilisée pour mettre en oeuvre l'étape de saccharification ou l'étape d'ébullition, auquel cas la maische ou le moût est disposé(e) au sein de la cuve pour y être chauffé(e) sous l'effet de la circulation de la vapeur d'eau dans la double enveloppe de la cuve.

Une telle cuve à double enveloppe chauffante présente cependant des inconvénients sérieux. En particulier, il s'avère difficile, sinon impossible, de procurer avec cet équipement un chauffage dont l'homogénéité, notamment spatiale, est véritablement et précisément maîtrisée. Cette limite en matière d'homogénéité de chauffage est d'autant plus marquée que la taille de l'équipement est importante (comme dans les installations industrielles de grande capacité), en raison notamment du fait que la vapeur a tendance, au fur et à mesure qu'elle progresse dans le circuit d'échange thermique, à se condenser.

Ainsi, le réglage et la régulation de la température (par réglage du débit ou de la pression de vapeur) s'avère en pratique extrêmement délicat à mettre en oeuvre, ce qui peut avoir pour conséquence, lors de l'étape de saccharification, que le transfert de chaleur ne soit ni suffisant ni assez homogène pour activer de façon adéquate l'action enzymatique. Cela peut également à conduire, au cours de l'étape de saccharification, à l'apparition de zones surchauffées (points chauds) au niveau desquelles peuvent se produire des phénomènes de caramélisation particulièrement nuisibles car ils provoquent d'une part un encrassement de la surface interne de la cuve et donc une réduction du coefficient de transfert thermique et d'autre part une dénaturation des enzymes ou à tout le moins une diminution de leur activité.

Il en résulte que la cuve doit impérativement être nettoyée de manière fréquente (par exemple tous les quinze brassages), ce qui contribue bien entendu à diminuer le rendement de l'installation et à donc augmenter le coût de revient de la bière ainsi fabriquée. Il peut en résulter également une hétérogénéité du produit obtenu, en fonction de l'état d'encrassement des parois, puisque le transfert thermique n'est pas constant en fonction du temps.

Afin de remédier autant que possible à ces inconvénients, il est connu de pourvoir ces cuves à double enveloppe d'un agitateur, dont l'action s'avère critique pour limiter (sans pour autant cependant le supprimer) le risque d'une sous-activité enzymatique et/ou de l'apparition de points chauds et de phénomènes indésirables de caramélisation. Il est donc absolument nécessaire, dans une telle installation, de mettre en oeuvre un remuage particulièrement intense à l'aide de l'agitateur. Toutefois, non seulement cette forte agitation ne permet pas d'empêcher complètement la survenance des phénomènes indésirables précités, mais elle a elle-même pour effet indésirable de favoriser l'oxydation de la maische ainsi que l'abrasion des particules de cette dernière, ce qui peut entraîner des difficultés lors de l'étape de filtration ultérieure.

La mise en oeuvre d'une telle cuve à double enveloppe pour réaliser l'étape d'ébullition s'avère également poser problème, là encore du fait des faiblesses de cet équipement en matière d'homogénéité de chauffage et de régulation de température. En particulier, cet équipement ne permet pas de maîtriser précisément les phénomènes de caramélisation et de réaction de Maillard qui contribuent aux qualités organoleptiques et à la coloration de la bière.

Afin de remédier en partie à ces inconvénients, il est connu de recourir à un équipement alternatif consistant en une cuve munie d'injecteurs de vapeur d'eau pour injecter de la vapeur d'eau directement à l'intérieur de la cuve, au sein du produit de brasserie (maische ou moût par exemple) contenu dans cette dernière. Cette injection de vapeur d'eau assure ainsi une double fonction de transfert thermique (chauffage) et d'agitation simultanée du produit de brasserie, qui est remué directement par le flux de vapeur d'eau.

Une telle technologie n'est cependant pas exempte d'inconvénients.

Ainsi, l'injection de vapeur d'eau génère nécessairement un apport d'eau et de contaminant potentiel (huile, minéraux, etc.) dans le produit de brasserie contenu dans la cuve, ce qui rend nécessaire de recourir à une installation de production de vapeur d'eau spécifique, dite installation de production de « *vapeur culinaire* », mettant en oeuvre différentes technologies (résine échangeuse d'ions, osmose inverse, dégazage, filtration à l'échelle du micron, etc.) destinés à assurer la pureté et l'innocuité de la vapeur injectée. En outre, une telle installation de production de vapeur culinaire représente un investissement tout à fait significatif, qui vient grever le coût de production. L'injection de vapeur directement à l'intérieur du produit de brasserie peut également induire des phénomènes d'inactivation enzymatiques par choc thermique pouvant avoir des conséquences sur le rendement ou la durée des cycles de chauffage lors de la saccharification.

DE102011113350 A1 divulgue une installation brassicole, comprenant une cuve et un dispositif de chauffage à induction installé dans l'isolation qui entoure la cuve.

Les procédés brassicoles industriels connus sont donc loin d'être optimisés, et le sont encore moins lorsque le produit de brasserie à traiter intègre dans sa formulation une proportion significative de céréales non maltées, voire uniquement des céréales non maltées, auquel cas l'utilisation d'enzymes exogènes et la maîtrise d'un chauffage séquentiel sont indispensables. Dans ce dernier cas de figure où des enzymes exogènes sont incorporées à la maische, les procédés brassicoles connus s'avèrent en effet être extrêmement délicats à piloter dans la mesure où la présence d'enzymes exogènes exige un contrôle et une régulation extrêmement fine, réactive et précise, très difficile à obtenir dans un contexte industriel avec les procédés et moyens connus.

Les objets assignés à la présente invention visent en conséquence à porter remède aux différents inconvénients énumérés précédemment et à proposer un nouveau procédé brassicole qui soit réalisable sur le plan industriel et qui permette d'obtenir de façon particulièrement simple, rapide et bon marché une boisson dont la qualité est particulièrement stable.

Un autre objet de l'invention vise à proposer un nouveau procédé brassicole qui repose sur la mise en oeuvre d'éléments particulièrement simples, robustes et faciles à entretenir.

Un autre objet de l'invention vise à proposer un nouveau procédé brassicole qui permet une excellente maîtrise du profil de température à mettre en oeuvre au fil de la production.

Un autre objet de l'invention vise à proposer un nouveau procédé brassicole particulièrement adapté au traitement d'un produit de brasserie intégrant dans sa formulation une proportion significative (par exemple d'au moins 30% environ) de céréales non maltées.

Un autre objet de l'invention vise à proposer une nouvelle installation brassicole de construction particulièrement simple et fiable, peu sujette à l'encrassement, et qui tout en présentant un excellent rendement énergétique permet d'obtenir une boisson dont les qualités, notamment sur le plan gustatif ou organoleptique, sont particulièrement maîtrisées et répétables.

Un autre objet de l'invention vise à proposer une nouvelle installation brassicole particulièrement sûre sur le plan sanitaire.

Un autre objet de l'invention vise à proposer une nouvelle installation brassicole permettant une fabrication particulièrement rapide et bon marché, permettant un gain de temps de production et une productivité améliorée.

Un autre objet de l'invention vise à proposer une nouvelle installation brassicole de construction compacte.

Les objets assignés à l'invention sont atteints à l'aide d'un procédé brassicole comprenant une étape de mise en contact d'un produit de brasserie avec un élément de transmission de chaleur, ledit procédé étant caractérisé en ce qu'il comprend une étape de chauffage dudit produit de brasserie, dans laquelle ledit élément de transmission de chaleur est chauffé par induction électromagnétique, de façon à lui-même chauffer en retour ledit produit de brasserie, ledit procédé comprenant une étape de dépose dudit produit de brasserie au sein d'une cuve, ledit élément de transmission de chaleur comprenant au moins ladite cuve.

Les objets assignés à l'invention sont également atteints à l'aide d'une installation brassicole comprenant un élément de transmission de chaleur conçu pour être mis en contact avec un produit de brasserie, caractérisée en ce qu'elle comprend au moins un premier inducteur conçu pour chauffer par induction électromagnétique ledit élément de transmission de chaleur, de façon que ce dernier chauffe lui-même en retour ledit produit de brasserie, l'installation comprenant une cuve conçue pour recevoir ledit produit de brasserie à chauffer, ledit élément de transmission de chaleur comprenant au moins ladite cuve.

D'autres objets et avantages de l'invention ressortiront plus en détails à la lecture de la description qui suit, et à l'aide de la figure annexée fournie à titre purement explicatif et non limitatif, représentant de façon schématique et partielle un détail de réalisation d'un exemple d'installation brassicole conforme à l'invention, permettant de mettre en oeuvre le procédé brassicole selon l'invention.

L'invention concerne, selon un premier aspect, un procédé brassicole, c'est à dire un procédé de fabrication d'une boisson fermentée, de préférence alcoolisée (mais qui peut éventuellement ne pas l'être), par transformation d'une substance, dénommée ici et dans ce qui suit « *produit de brasserie* », qui est préférentiellement à base de céréales et/ou inclut par exemple des sucres complexes, destinés à être transformés par le procédé brassicole en sucres fermentescibles, de préférence sous l'action d'enzymes endogènes ou exogènes. Par *« produit de brasserie »,* on désigne ici, de façon générale, toute substance de base ou intermédiaire destinée à être transformée au cours du procédé brassicole pour aboutir à une boisson propre à la consommation humaine. Par exemple, le produit de brasserie 2 mis en oeuvre dans le cadre de l'invention est formé, au moins en partie, par au moins l'une des substances suivantes : maische, moût de brasserie, extrait de malt, produit de distillerie, cette liste n'étant pas limitative. De préférence également, le produit de brasserie 2 inclut des céréales ou des dérivés de céréales ou encore des sources d'amidon ou de sucres de quelque nature que ce soit, destinés à assurer l'apport de sucres complexes évoqué précédemment. Le produit de brasserie 2 présente avantageusement une consistance fluide, et plus précisément une consistance liquide, pseudo-liquide ou pâteuse.

Avantageusement, le procédé brassicole est un procédé industriel, destiné à être mis en oeuvre au sein d'une brasserie industrielle.

De préférence, le procédé brassicole conforme à l'invention est un procédé de fabrication de bière, et de façon encore plus préférentielle un procédé industriel de fabrication de bière. Dans ce cas, le procédé brassicole selon l'invention comprend avantageusement au moins une étape de saccharification, une étape de filtration, une étape d'ébullition et avantageusement une étape de fermentation.

Le procédé brassicole selon l'invention comprend au moins une étape de mise en contact d'un produit de brasserie 2 avec un élément de transmission de chaleur 3, pour chauffer ledit produit de brasserie 2. Dans le cas de figure préférentiel où le procédé brassicole est un procédé de fabrication de bière, l'étape de mise en contact du produit de brasserie 2 (formé par exemple par une maische) avec l'élément de transmission de chaleur 3 peut intervenir pendant tout ou partie de chacune desdites étapes de saccharification, d'ébullition et de fermentation précitées. Avantageusement, le procédé comprend une étape de saccharification et/ou une étape d'ébullition, ladite étape de chauffage se déroulant au moins pendant ladite étape de saccharification et/ou au moins pendant ladite étape d'ébullition. De façon préférentielle, l'étape de mise en contact du produit de brasserie 2 avec l'élément de transmission de chaleur 3 intervient uniquement pendant tout ou partie de chacune des étapes de saccharification et d'ébullition.

Le procédé selon l'invention comprend au moins une étape de chauffage dudit produit de brasserie 2, dans laquelle ledit élément de transmission de chaleur 3 est chauffé par induction électromagnétique, de façon à lui-même chauffer en retour ledit produit de brasserie 2. Ainsi, la montée en température de l'élément de transmission de chaleur 3 est obtenue en soumettant ce dernier à un champ magnétique variable (ou en mettant en mouvement l'élément de transmission de chaleur 3 au sein d'un champ magnétique) de façon à générer un courant induit dans l'élément de transmission de chaleur 3, courant induit qui échauffe, par effet Joule, l'élément de transmission de chaleur 3, cet échauffement étant transmis par exemple par conduction thermique au produit de brasserie 2. Un tel phénomène d'induction électromagnétique est bien connu dans son principe général, qui ne nécessite donc pas d'explications supplémentaires. Bien entendu, afin de pouvoir être le siège des courants induits précités, l'élément de transmission de chaleur 3 est réalisé en un matériau adapté, savoir un matériau métallique présentant des propriétés magnétiques idoines (matériau magnétique ou magnétisable).

Ainsi, le chauffage du produit de brasserie 2, qui permet la montée et/ou le maintien en température de ce dernier, par exemple au cours des différentes étapes (saccharification, ébullition...) avantageusement mis en oeuvre par le procédé brassicole, permet par exemple de piloter de façon très précise l'action enzymatique dont la maîtrise est capitale, lors de l'étape de saccharification, pour l'obtention d'une boisson (du genre bière) de qualité. Cette précision dans le pilotage de la régulation de température permet en particulier une montée en température de la maische jusqu'à un niveau très proche du seuil de caramélisation, sans pour autant atteindre ce dernier, ce qui permet de procéder à un chauffage très rapide sans risque pour le produit. La grande précision et l'homogénéité, associée à un temps de réponse à l'échauffement très faible, procurées par le chauffage par induction, permet d'éviter tout point chaud, choc thermique, et phénomène de caramélisation involontaire (brûlage) sans pour autant qu'il ne soit nécessaire de remuer fortement le produit de brasserie 2 lors de son chauffage, comme dans l'art antérieur. Le chauffage par induction électromagnétique mis en oeuvre dans le cadre du procédé brassicole selon l'invention permet en outre de maîtriser finement la colorimétrie et le profil organoleptique du produit de brasserie 2, tout en limitant les phénomènes d'abrasion des particules composant ledit produit de brasserie 2. En particulier, la mise en oeuvre d'un chauffage par induction électromagnétique lors de l'étape d'ébullition permet de contrôler de façon précise la coloration du produit de brasserie 2 (formé en l'occurrence par un moût), en pilotant finement la température du produit 2 qui conditionne le déclenchement des réactions de Maillard et de caramélisation. En outre, la mise en oeuvre d'un chauffage par induction électromagnétique s'avère être facile à automatiser et à intégrer dans une chaîne de production brassicole, et permet une excellente reproductibilité des cycles de chauffage (ce qui s'avère primordial pour maîtriser la stabilité de la qualité d'un produit aussi sensible que la bière). L'absence de brûlage involontaire, comme exposé ci-avant, autorise en outre une maintenance et des opérations de nettoyage réduites, avec une minimisation de la fréquence des cycles de lavage qui entraînent en retour un moindre rejet d'effluents de lavage, ce qui constitue une économie venant s'ajouter au gain énergétique substantiel procuré par la mise en oeuvre d'un chauffage par induction électromagnétique par rapport à un chauffage classique à l'aide de vapeur d'eau. Ce gain est potentiellement d'autant plus important que le chauffage par induction électromagnétique permet un transfert de chaleur à travers un isolant thermique. Enfin, le recours à un tel chauffage par induction dans un procédé brassicole permet d'éviter les coûts importants liés à la chaudronnerie complexe requise par les systèmes classiques reposant sur un chauffage à l'aide de vapeur d'eau.

Avantageusement, le procédé brassicole de l'invention comprend une étape de dépose dudit produit de brasserie 2 au sein d'une cuve 4, de façon que ledit produit de brasserie 2 soit contenu par la cuve 4, au sein du volume intérieur 4A délimité par cette dernière.

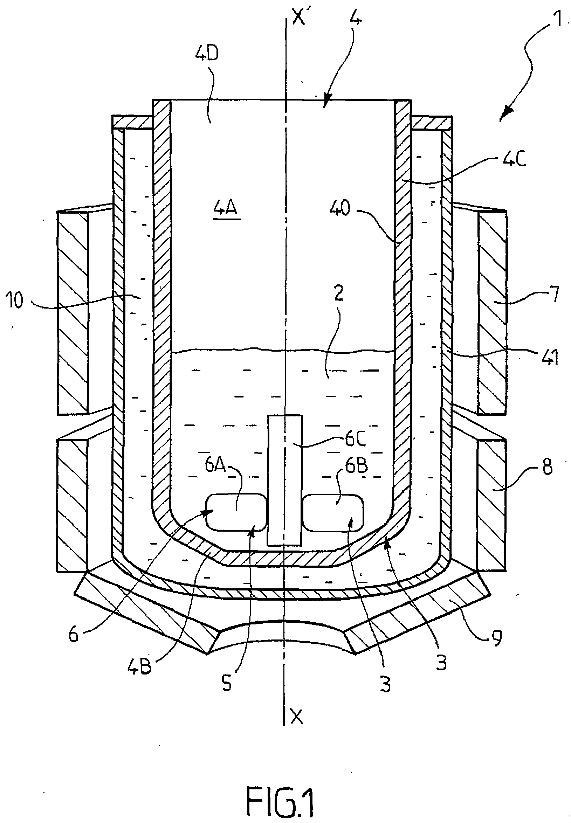

La cuve 4 présente de préférence une forme de révolution, d'axe de symétrie X-X', ce dernier étant de préférence confondu avec la direction verticale, comme illustré par la figure 1. Dans l'exemple illustré, la cuve 4 comporte par exemple un fond 4B à partir duquel s'élève une paroi latérale annulaire 4C délimitant une ouverture supérieure 4D par laquelle le produit de brasserie 2 est destiné à être introduit dans la cuve 4. Bien entendu, des moyens de fermeture adaptés peuvent être mis en oeuvre pour obturer l'ouverture supérieure 4D de façon que ledit volume intérieur 4A soit entièrement fermé, éventuellement de manière sensiblement hermétique.

Ledit élément de transmission de chaleur 3 comprend au moins ladite cuve 4. La cuve 4 est donc elle-même directement chauffée par induction électromagnétique, c'est-à-dire qu'elle est soumise à un champ électromagnétique variable généré par un inducteur de façon à engendrer au sein même du matériau formant la cuve 4 des courants induits produisant un échauffement par effet Joule. Bien entendu, la cuve 4 est réalisée en un matériau approprié, c'est-à-dire un matériau métallique susceptible d'être chauffé par induction électromagnétique (du genre matériau magnétique ou magnétisable).

De manière complémentaire, il est également envisageable que ledit élément de transmission de chaleur 3 comprenne au moins un organe de chauffe 5 disposé au sein de la cuve 4 de façon à être en contact avec ledit produit de brasserie 2 déposé au sein de la cuve 4. Dans ce cas de figue, l'organe de chauffe 5 est donc positionné dans le volume interne 4A délimité par la cuve 4, de préférence au fond de cette dernière, de façon à être préférentiellement immergé dans le produit de brasserie 2. Il est bien entendu tout à fait envisageable de chauffer par induction à la fois la cuve 4 et l'organe de chauffe 5, de sorte que l'apport de chaleur auquel est soumis le produit de brasserie 2 résulte dans ce cas du chauffage par induction de la cuve 4 et de l'organe de chauffe 5.

Avantageusement, le procédé brassicole selon l'invention comprend une étape d'agitation, à l'aide d'un agitateur 6 disposé au sein de la cuve 4, dudit produit de brasserie 2 pendant l'étape de chauffage. Ainsi, afin d'améliorer l'homogénéité et l'efficacité de l'étape de chauffage, l'agitateur 6, qui est de préférence immergé au sein du produit de brasserie 2 contenu dans la cuve 4, remue le produit de brasserie 2. A cette fin, l'agitateur 6 est avantageusement mobile relativement à la cuve 4, et de préférence mobile en rotation, par exemple selon l'axe de symétrie X-X' de la cuve 4 comme illustré, ou selon un axe de rotation décalé par rapport à l'axe de symétrie X-X' de façon à générer une agitation excentrée. L'agitateur 6 comporte par exemple une ou plusieurs pales 6A, 6B montées sur un moyeu 6C qui est lui-même mis en rotation par un dispositif moteur, que ce soit par transmission mécanique directe (auquel cas le moyeu 6C est par exemple solidaire d'un arbre qui s'étend à travers le fond 4B de la cuve 4 pour être fixé sur l'arbre de sortie d'un moteur disposé à l'extérieur de la cuve 4) ou par transmission sans contact (entraînement magnétique par exemple).

De préférence, l'agitateur 6 offre un remuage adapté au produit de brasserie 2, et qui est relativement lent par rapport au remuage que pourraient offrir les moyens d'agitation d'un robot ménager pour confectionner une préparation alimentaire, par exemple de type soupe, purée, ou mélange de fruits pressés. Préférentiellement, l'agitateur 6 est conçu pour remuer le produit de brasserie 2 en tournant à une vitesse comprise entre 10 et 60 tours par minute, de préférence environ 25 tours par minute. Il s'agit en effet simplement de remuer le produit de brasserie, en vue précisément de le brasser, et non de le hacher, mixer, ou transformer en purée.

Avantageusement, ledit agitateur 6 forme ledit organe de chauffe 5, de sorte que dans ce cas l'agitateur 6 est chauffé par induction électromagnétique, de façon à assurer une double fonction de remuage d'une part et de chauffage d'autre part. Il est bien entendu tout à fait envisageable, sans pour autant que l'on sorte du cadre de l'invention, que l'organe de chauffe 5 soit disposé de manière stationnaire au sein de la cuve 4 et qu'il ne forme dès lors pas, bien qu'étant distinct de la cuve 4, un quelconque moyen d'agitation. Par exemple, l'organe de chauffe 5 peut être formé par une calandre d'échange thermique disposée dans la cuve 4, ou par un échangeur tubulaire interne, ou par tout autre dispositif permettant d'augmenter la surface d'échange thermique entre le produit de brasserie 2 et l'organe de chauffe 5, afin de réaliser l'étape d'ébullition. L'organe de chauffe 5 peut en particulier être formé par un élément d'un système d'évaporation sur couche mince (de tels systèmes étant généralement connus sous l'appellation anglophone «*stripping systems*»). Dans ce cas, le système d'évaporation sur couche mince comprend par exemple une surface conique s'élevant à l'intérieur de la cuve 4, à partir du fond de cette dernière, et un dispositif de circulation (incluant une pompe par exemple) permettant de créer un écoulement permanent et en couche mince du produit de brasserie 2 sur et le long dudit cône, ce dernier constituant avantageusement l'organe de chauffe 5. Un tel mode de réalisation, dans lequel l'organe de chauffe 5 est formé par un échangeur thermique interne à la cuve 4, favorise la maîtrise et le pilotage des phénomènes recherchés au cours de l'ébullition, savoir: la clarification du moût par coagulation des protéines, la concentration du moût par évaporation, l'élimination des composés volatils indésirables par évaporation de ces derniers, le blocage de l'action enzymatique, le développement de l'amertume (par adjonction de houblon et isomérisation des acides alpha issus de ce dernier), le développement des réactions de Maillard et de caramélisation qui influent sur les arômes et la couleur.

Dans le mode de réalisation illustré, la cuve 4 contribue à former l'élément de transmission de chaleur 3. Dans ce cas, l'étape de chauffe comprend avantageusement une opération de soumission de la cuve 4 à au moins un premier champ magnétique généré par au moins un premier inducteur 7 entourant au moins partiellement ladite cuve 4. Avantageusement, ledit premier inducteur 7 est formé par une bobine dont les spires entourent au moins une fraction de la cuve 4. Dans l'exemple illustré, le premier inducteur 7 entoure ainsi la paroi latérale 4C de la cuve 4 sur une fraction de la hauteur de cette dernière, de telle sorte que ledit premier inducteur 7 effectue un chauffage localisé de la cuve 4, dont seule la portion de paroi située sensiblement au droit du premier inducteur 7 s'échauffe, tandis que le reste de la cuve 4 ne s'échauffe sensiblement pas.

De préférence, l'étape de chauffe comprend une opération de soumission de la cuve 4 à plusieurs champs magnétiques, par exemple des premiers, deuxième et troisième champs magnétiques générés respectivement par plusieurs inducteurs, par exemple un premier inducteur 7, un deuxième inducteur 8 et un troisième inducteur 9 disposés de façon adjacente les uns aux autres pour couvrir différents secteurs de la cuve 4.

Ainsi, dans l'exemple illustré, le troisième inducteur 9 est disposé en regard du fond 4B de la cuve 4, tandis qu'une première fraction de la paroi latérale 4C est entourée par le deuxième inducteur 8 et qu'une deuxième fraction de la paroi latérale 4C, de préférence sensiblement adjacente à ladite première fraction, est entouré par le premier inducteur 7. Ceci permet de piloter très finement, et de façon localisée et différenciée, l'échauffement de la cuve 4. Un tel chauffage par zones permet d'optimiser l'apport de chaleur, en évitant de chauffer inutilement une zone où le produit de brasserie 2 n'est pas présent (cas d'un petit volume de brassin à traiter, largement inférieur à la capacité nominale de la cuve 4).

Avantageusement, l'étape de chauffage comprend au moins d'une part une première sous-étape de montée en température, au cours de laquelle ledit élément de transmission de chaleur 3 est chauffé par induction électromagnétique, de façon à lui-même chauffer en retour ledit produit de brasserie 2 jusqu'à ce que la température de ce dernier atteigne une première température cible, et d'autre part une première sous-étape de maintien dudit produit de brasserie 2 à ladite première température cible pendant une première durée prédéterminée.

L'étape de chauffage comprend avantageusement différentes sous-étapes de montée en température du produit de brasserie 2, qui suivent des sous-étapes de maintien du produit de brasserie 2 à une température cible (palier de température).

L'étape de chauffage permet ainsi de faire atteindre successivement au produit de brasserie 2 des paliers de température de plus en plus élevés, ce qui permet par exemple de favoriser le travail de différentes enzymes, afin notamment de transformer des sucres complexes en sucres simples, éventuellement fermentescibles.

Ainsi, le produit de brasserie 2 contient avantageusement, lorsqu'il est soumis à ladite étape de chauffage, au moins une enzyme, et de préférence plusieurs enzymes destinées à assurer différentes fonctions (saccharification, dégradation de la cellulose, etc.). Cette ou ces enzymes peuvent être de nature endogène, c'est-à-dire qu'elles sont contenues dès l'origine dans les ingrédients composant le produit de brasserie 2. Par exemple, lorsque le produit de brasserie 2 est une maische constituée uniquement de céréales maltées, les enzymes en question sont celles contenus dans le grain des céréales (généralement orge ou blé) entrant dans la composition de ladite maische.

Il est également envisageable que certaines enzymes, voire même toutes les enzymes en question soient ajoutées au produit de brasserie 2, auquel cas ces enzymes sont qualifiées d'enzymes exogènes. Le procédé comprend ainsi préférentiellement, préalablement à ladite étape de chauffage, une étape d'incorporation d'au moins une enzyme exogène dans ledit produit de brasserie 2. De façon particulièrement avantageuse, le procédé brassicole comprend une étape de saccharification du produit de brasserie 2, lequel comprend de préférence au moins une enzyme (endogène et/ou exogène), ladite étape de chauffage se déroulant au moins pendant ladite étape de saccharification.

Dans ce cas de figure préférentiel (emploi d'enzymes exogènes, à titre exclusif ou en complément d'enzymes endogènes), qui permet généralement une meilleure maîtrise du procédé brassicole sur le plan logistique et économique, le chauffage par induction électromagnétique mis en oeuvre dans le cadre de l'invention permet un pilotage de l'apport de chaleur particulièrement fin et précis, avec notamment une grande précision de régulation et une possibilité de modulation surfacique fine (au cm² près) de la puissance de chauffe, conduisant à l'obtention d'excellents résultats en comparaison avec les modes de chauffage classiques (reposant sur l'emploi de vapeur d'eau).

Le procédé selon l'invention est ainsi particulièrement adapté au traitement d'un produit de brasserie 2 qui inclut des céréales non maltées. Préférentiellement, le produit de brasserie 2 intègre dans sa formulation une proportion significative de céréales non maltées, de préférence, au moins 30% en masse de céréales non maltées.

L'invention concerne par ailleurs en tant que telle une installation brassicole 1 conçue pour mettre en oeuvre le procédé brassicole exposé précédemment. Par conséquent, la description qui précède, relative au procédé, reste évidemment pleinement valable pour l'installation brassicole 1. De préférence, l'installation brassicole 1 constitue une installation de fabrication de bière, et plus précisément une installation industrielle de fabrication de bière.

L'installation 1 comprend un élément de transmission de chaleur 3 conçu pour être mis en contact avec un produit de brasserie 2.

L'installation 1 comprend également au moins un premier inducteur 7 conçu pour chauffer par induction électromagnétique ledit élément de transmission de chaleur 3, de façon que ce dernier chauffe lui-même en retour ledit produit de brasserie 2, par exemple par conduction thermique. A cette fin, ledit premier inducteur 7 entoure au moins partiellement la cuve 4.

Le premier inducteur 7 comprend avantageusement une bobine dont les spires entourent la cuve 4, comme déjà exposé plus en détails en relation avec la description du procédé qui précède.

De préférence, le premier inducteur 7 comprend en outre, reliés à la bobine en question, un dispositif de contrôle incluant un transformateur, un générateur de fréquences et un oscillateur, l'ensemble de ce dispositif étant conçu pour pouvoir être commandé, de manière plus ou moins automatisée, par l'utilisateur de l'installation 1 pour piloter, comme cela est connu en tant que tel, l'activité du premier inducteur 7 et le champ magnétique variable produit par ce dernier.

Comme exposé dans ce qui précède en relation avec le procédé, l'installation brassicole 1 comprend avantageusement une cuve 4 conçue pour recevoir le produit de brasserie 2 à chauffer. L'élément de transmission de chaleur 3 comprend au moins ladite cuve 4. Il est également envisageable, comme déjà expliqué en relation avec le procédé, que ledit élément de transmission de chaleur 3 comprenne également un organe de chauffe 5, disposé au sein de la cuve 4 de façon à être en contact avec ledit produit de brasserie 2 contenu par ladite cuve 4.

De préférence, l'installation brassicole 1 comprend également un agitateur 6 disposé au sein de la cuve 4 pour remuer le produit de brasserie 2 pendant son chauffage. De façon encore plus préférentielle, ledit agitateur 6 forme, en tout ou partie, ledit organe de chauffe 5.

Avantageusement, comme illustré, la cuve 4 comprend une double enveloppe incluant une paroi interne 40 délimitant un volume interne 4A destiné à recevoir ledit produit de brasserie 2, une paroi externe 41 entourant ladite paroi interne 40 de façon à délimiter avec cette dernière un espace interstitiel contenant un fluide de refroidissement 10 dudit premier inducteur 7, lequel entoure ladite paroi externe 41.

L'installation brassicole 1 comprend avantageusement dans ce cas un dispositif pour faire circuler le fluide de refroidissement 10 dans ledit espace interstitiel, afin de former un circuit de refroidissement pour refroidir de façon sensiblement continue le premier inducteur 7. Ce circuit de refroidissement permet avantageusement de récupérer une partie de l'énergie perdue, dans la mesure où le fluide de refroidissement (qui est formé de préférence par de l'eau) ainsi chauffé peut être réutilisé lors d'une autre étape du procédé où un tel fluide chaud est requis.

Un tel agencement s'avère particulièrement avantageux du point de vue notamment de son efficacité et de sa compacité, qui le rendent particulièrement adapté au domaine de l'industrie brassicole.

Avantageusement, l'installation brassicole 1 comprend un poste de saccharification incluant ledit élément de transmission de chaleur 3 et ledit premier inducteur 7, afin de permettre un pilotage particulièrement sûr, réactif et précis de la température du produit de brasserie 2 pendant la saccharification de ce dernier.

## Revendications

1. Procédé brassicole comprenant une étape de mise en contact d'un produit de brasserie (2) avec un élément de transmission de chaleur (3), ledit procédé étant **caractérisé en ce qu'**il comprend une étape de chauffage dudit produit de brasserie (2), dans laquelle ledit élément de transmission de chaleur (3) est chauffé par induction électromagnétique, de façon à lui-même chauffer en retour ledit produit de brasserie (2), ledit procédé comprenant une étape de dépose dudit produit de brasserie (2) au sein d'une cuve (4), ledit élément de transmission de chaleur (3) comprenant au moins ladite cuve (4), ladite cuve (4) étant en un matériau métallique susceptible d'être chauffé par induction électromagnétique, de sorte que ladite cuve (4) est directement chauffée par induction électromagnétique.

2. Procédé brassicole selon la revendication 1 **caractérisé en ce que** ledit élément de transmission de chaleur (3) comprend au moins un organe de chauffe (5) disposée au sein de la cuve (4) de façon à être en contact avec ledit produit de brasserie (2) déposé au sein de ladite cuve (4).

3. Procédé brassicole selon la revendication 2 **caractérisé en ce qu'**il comprend une étape d'agitation, à l'aide d'un agitateur (6) disposé au sein de ladite cuve (4), dudit produit de brasserie (2) pendant l'étape de chauffage ledit agitateur (6) formant ledit organe de chauffe (5).

4. Procédé brassicole selon l'une des revendications 1 à 3 **caractérisé en ce que** l'étape de chauffe comprend une opération de soumission de la cuve (4) à au moins un premier champ magnétique généré par au moins un premier inducteur (7) entourant au moins partiellement ladite cuve (4).

5. Procédé brassicole selon l'une des revendications 1 à 4 **caractérisé en ce que** ledit produit de brasserie (2) contient, lorsqu'il est soumis à ladite étape de chauffage, au moins une enzyme.

6. Procédé brassicole selon l'une des revendications 1 à 5 **caractérisé en ce qu'**il comprend, préalablement à ladite étape de chauffage, une étape d'incorporation d'au moins une enzyme exogène dans ledit produit de brasserie (2).

7. Procédé brassicole selon l'une des revendications 1 à 6, **caractérisé en ce que** le produit de brasserie (2) inclut des céréales non maltées.

8. Procédé brassicole selon l'une des revendications 1 à 7 **caractérisé en ce qu'**il comprend une étape de saccharification, ladite étape de chauffage se déroulant au moins pendant ladite étape de saccharification et **en ce qu'**il comprend une étape d'ébullition, ladite étape de chauffage se déroulant au moins pendant ladite étape d'ébullition.

9. Procédé brassicole selon l'une des revendications 1 à 8 **caractérisé en ce que** ledit produit de brasserie (2) est formé au moins en partie par au moins l'une des substances suivantes : maische, moût de brasserie, extraits de malt, produit de distillerie.

10. Procédé brassicole selon l'une des revendications 1 à 9 **caractérisé en ce qu'**il constitue un procédé industriel de fabrication de bière.

11. Installation brassicole (1) comprenant un élément de transmission de chaleur (3) conçu pour être mis en contact avec un produit de brasserie (2), **caractérisée en ce qu'**elle comprend au moins un premier inducteur (7) conçu pour chauffer par induction électromagnétique ledit élément de transmission de chaleur (3), de façon que ce dernier chauffe lui-même en retour ledit produit de brasserie (2), l'installation comprenant une cuve (4) conçue pour recevoir ledit produit de brasserie (2) à chauffer, ledit élément de transmission de chaleur (3) comprenant au moins ladite cuve (4), ladite cuve (4) étant en un matériau métallique susceptible d'être chauffé par induction électromagnétique, de sorte que ladite cuve (4) est directement chauffée par induction électromagnétique.

12. Installation brassicole (1) selon la revendication 11 **caractérisée en ce que** ledit élément de transmission de chaleur (3) comprend au moins un organe de chauffe (5) disposée au sein de la cuve (4) de façon à être en contact avec ledit produit de brasserie (2) contenu par ladite cuve (4).

13. Installation brassicole (1) selon la revendication 12 **caractérisée en ce qu'**elle comprend un agitateur (6) disposé au sein de ladite cuve (4) pour remuer ledit produit de brasserie (2) pendant son chauffage, ledit agitateur (6) formant ledit organe de chauffe (5).

14. Installation brassicole (1) selon l'une des revendications 11 à 13 **caractérisée en ce que** ledit premier inducteur (7) entoure au moins partiellement ladite cuve (4).

15. Installation brassicole (1) selon l'une des revendications 11 à 14 **caractérisée en ce qu'**elle constitue une installation industrielle de fabrication de bière.

## Patentansprüche

1. Brauverfahren, das einen Schritt des Inkontaktbringens eines Brauereiproduktes (2) mit einem Wärmeübertragungselement (3) umfasst, wobei das Verfahren **dadurch gekennzeichnet ist, dass** es einen Schritt des Erhitzens des besagten Brauereiprodukts (2) umfasst, bei dem das besagte Wärmeübertragungselement (3) durch elektromagnetische Induktion erhitzt wird, so dass es im Gegenzug selbst das besagte Brauereiprodukt (2) erhitzt, wobei das besagte Verfahren einen Schritt des Ablegens des besagten Brauereiprodukts (2) innerhalb eines Kessels (4) umfasst, wobei das besagte Wärmeübertragungselement (3) mindestens den besagten Kessel (4) umfasst, wobei der besagte Kessel (4) aus einem metallischen Material besteht, das durch elektromagnetische Induktion erhitzt werden kann, so dass der besagte Kessel (4) unmittelbar durch elektromagnetische Induktion erhitzt wird.

2. Brauverfahren nach Anspruch 1, **dadurch gekennzeichnet, dass** das Wärmeübertragungselement (3) mindestens eine Heizeinrichtung (5) umfasst, die innerhalb des Kessels (4) angeordnet ist, so dass sie mit dem innerhalb des besagten Kessels (4) abgelegten Brauereiprodukt (2) in Kontakt ist.

3. Brauverfahren nach Anspruch 2, **dadurch gekennzeichnet, dass** es einen Schritt des Rührens des Brauereiprodukts (2) mit Hilfe einer innerhalb des besagten Kessels (4) angeordneten Rührvorrichtung (6) während des Schrittes des Erhitzens umfasst, wobei die besagte Rührvorrichtung (6) die besagte Heizeinrichtung (5) bildet.

4. Brauverfahren nach einem der Ansprüche 1 bis 3, **dadurch gekennzeichnet, dass** der Schritt des Erhitzens einen Vorgang umfasst, bei dem der Kessel (4) mindestens einem ersten Magnetfeld ausgesetzt wird, das durch mindestens einen ersten Induktor (7) erzeugt wird, der den besagten Kessel (4) mindestens teilweise umgibt.

5. Brauverfahren nach einem der Ansprüche 1 bis 4, **dadurch gekennzeichnet, dass** das besagte Brauereiprodukt (2) mindestens ein Enzym enthält, wenn es dem Schritt des Erhitzens unterzogen wird.

6. Brauverfahren nach einem der Ansprüche 1 bis 5, **dadurch gekennzeichnet, dass** es vor dem Schritt des Erhitzens einen Schritt des Einfügens von mindestens einem exogenen Enzym in das besagte Brauereiprodukt (2) umfasst.

7. Brauverfahren nach einem der Ansprüche 1 bis 6, **dadurch gekennzeichnet, dass** das besagte Brauereiprodukt (2) ungemälztes Getreide enthält.

8. Brauverfahren nach einem der Ansprüche 1 bis 7, **dadurch gekennzeichnet, dass** es einen Schritt der Verzuckerung umfasst, wobei der besagte Schritt des Erhitzens mindestens während des besagten Schritts der Verzuckerung abläuft, und dass es einen Schritt des Siedens umfasst, wobei der besagte Schritt des Erhitzens mindestens während des besagten Schritts des Siedens abläuft.

9. Brauverfahren nach einem der Ansprüche 1 bis 8, **dadurch gekennzeichnet, dass** das besagte Brauereiprodukt (2) mindestens teilweise durch mindestens einen der folgenden Stoffe gebildet wird: Maische, Bierwürze, Malzextrakte, Destillatprodukt.

10. Brauverfahren nach einem der Ansprüche 1 bis 9, **dadurch gekennzeichnet, dass** es ein industrielles Verfahren zur Herstellung von Bier darstellt.

11. Brauanlage (1) mit einem Wärmeübertragungselement (3), das dazu vorgesehen ist, mit einem Brauereiprodukt (2) in Kontakt gebracht zu werden, **dadurch gekennzeichnet, dass** sie mindestens einen ersten Induktor (7) aufweist, der zum Erhitzen des Wärmeübertragungselements (3) durch elektromagnetische Induktion vorgesehen ist, so dass Letzteres im Gegenzug selbst das besagte Brauereiprodukt (2) erhitzt, wobei die Anlage einen Kessel (4) aufweist, der dazu vorgesehen ist, das besagte zu erhitzende Brauereiprodukt (2) aufzunehmen, wobei das besagte Wärmeübertragungselement (3) mindestens den besagten Kessel (4) umfasst, wobei der besagte Kessel (4) aus einem metallischen Material besteht, das durch elektromagnetische Induktion erhitzt werden kann, so dass der besagte Kessel (4) unmittelbar durch elektromagnetische Induktion erhitzt wird.

12. Brauanlage (1) nach Anspruch 11, **dadurch gekennzeichnet, dass** das besagte Wärmeübertragungselement (3) mindestens eine Heizeinrichtung (5) umfasst, die innerhalb des Kessels (4) angeordnet ist, so dass sie mit dem im besagten Kessel (4) enthaltenen besagten Brauereiprodukt (2) in Kontakt ist.

13. Brauanlage (1) nach Anspruch 12, **dadurch gekennzeichnet, dass** sie eine innerhalb des besagten Kessels (4) angeordnete Rührvorrichtung (6) umfasst, um das Brauereiprodukt (2) während seines Erhitzens zu rühren, wobei die besagte Rührvorrichtung (6) die besagte Heizeinrichtung (5) bildet.

14. Brauanlage (1) nach einem der Ansprüche 11 bis 13, **dadurch gekennzeichnet, dass** der besagte erste Induktor (7) den besagten Kessel (4) mindestens teilweise umgibt.

15. Brauanlage (1) nach einem der Ansprüche 11 bis 14, **dadurch gekennzeichnet, dass** sie eine industrielle Anlage zur Herstellung von Bier darstellt.

## Claims

1. Brewing method comprising a step of putting a brewing product (2) in contact with a heat transmission element (3), said method being **characterised in that** it comprises a step of heating said brewing product (2), wherein said heat transmission element (3) is heated by electromagnetic induction, so as itself in return to heat said brewing product (2), said method comprising a step of depositing said brewing product (2) in a vessel (4), said heat transmission element (3) comprising at least said vessel (4), said vessel (4) being made from a metal material able to be heated by electromagnetic induction, so that said vessel (4) is directly heated by electromagnetic induction.

2. Brewing method according to claim 1, **characterised in that** said heat transmission element (3) comprises at least one heating member (5) disposed in the vessel (4) so as to be in contact with said brewing product (2) deposited in said vessel (4).

3. Brewing method according to claim 2, **characterised in that** it comprises a step of stirring, by means of a stirrer (6) arranged in said vessel (4), said brewing product (2) during the step of heating said stirrer (6) forming said heating member (5).

4. Brewing method according to any of claims 1 to 3, **characterised in that** the heating step comprises an operation of subjecting the vessel (4) to at least one first magnetic field generated by at least one first inductor (7) at least partially surrounding said vessel (4).

5. Brewing method according to any of claims 1 to 4, **characterised in that** said brewing product (2) contains, when it is subjected to said heating step, at least one enzyme.

6. Brewing method according to any of claims 1 to 5, **characterised in that** it comprises, prior to said heating step, a step of incorporating at least one exogenous enzyme in said brewing product (2).

7. Brewing method according to any of claims 1 to 6, **characterised in that** the brewing product (2) includes non-malted cereals.

8. Brewing method according to any of claims 1 to 7, **characterised in that** it comprises a saccharification step, said heating step taking place at least during said saccharification step, and **in that** it comprises a boiling step, said heating step taking place at least during said boiling step.

9. Brewing method according to any of claims 1 to 8, **characterised in that** said brewing product (2) is formed at least partly by at least one of the following substances: mash, brewing wort, malt extracts, distillery product.

10. Brewing method according to any of claims 1 to 9, **characterised in that** it constitutes an industrial beer-manufacturing method.

11. Brewing installation (1) comprising a heat transmission element (3) designed to be put in contact with a brewing product (2), **characterised in that** it comprises at least one first inductor (7) designed to heat by electromagnetic induction said heat transmission element (3), so that the latter itself in return heats said brewing product (2), the installation comprising a vessel (4) designed to receive said brewing product (2) to be heated, said heat transmission element (3) comprising at least said vessel (4), said vessel (4) being made from a metal material able to be heated by electromagnetic induction, so that said vessel (4) is directly heated by electromagnetic induction.

12. Brewing installation (1) according to claim 11, **characterised in that** said heat transmission element (3) comprises at least one heating member (5) disposed in the vessel (4) so as to be in contact with said brewing product (2) contained by said vessel (4).

13. Brewing installation (1) according to claim 12, **characterised in that** it comprises a stirrer (6) disposed in said vessel (4) in order to stir said brewing product (4) during heating thereof, said stirrer (6) forming said heating member (5).

14. Brewing installation (1) according to any of claims 11 to 13, **characterised in that** said first inductor (7) at least partially surrounds said vessel (4).

15. Brewing installation (1) according to any of claims 11 to 14, **characterised in that** it constitutes an industrial beer-manufacturing installation.
